Europäisches Patentamt

European Patent Office

Office européen des brevets

(11) Veröffentlichungsnummer: **0 267 152 B1**

(12) **EUROPÄISCHE PATENTSCHRIFT**

(45) Veröffentlichungstag der Patentschrift: **10.07.91**

(21) Anmeldenummer: **87810607.9**

(22) Anmeldetag: **21.10.87**

(51) Int. Cl.⁵: **B60J 5/10, B62D 25/04,** B62D 33/04, B61D 17/08, E06B 3/16

(54) Bauprofilsatz für das Kastengerippe eines Nutzfahrzeuges sowie Gerippe.

(30) Priorität: **03.11.86 CH 4370/86**

(43) Veröffentlichungstag der Anmeldung: **11.05.88 Patentblatt 88/19**

(45) Bekanntmachung des Hinweises auf die Patenterteilung: **10.07.91 Patentblatt 91/28**

(84) Benannte Vertragsstaaten: **AT BE CH DE ES FR GB IT LI NL SE**

(56) Entgegenhaltungen:
EP-A- 0 018 073     AU-B- 83 281
CH-A- 378 702       DE-A- 2 701 905
FR-A- 1 551 518     US-A- 1 608 672
US-A- 2 793 068     US-A- 3 034 824
US-A- 3 070 400     US-A- 3 353 863

(73) Patentinhaber: **ALUSUISSE-LONZA SERVICES AG**
**Feldeggstrasse 4**
**CH-8034 Zürich(CH)**

(72) Erfinder: **Röllin, Ulrich**
**Am Sutteracher 31**
**CH-8048 Zürich(CH)**

## Beschreibung

Die vorliegende Erfindung bezieht sich auf einen Bauprofilsatz für das Kastengeripppe eines Nutzfahrzeuges, welcher insbesondere für die Konstruktion von Querrahmen und Türrahmen, z.B. eines zur Aufnahme von Hecktüren bestimmten Heckrahmens, besonders geeignet ist, wobei für das restliche Gerippe gleichartige oder aber auch andersartige Bauprofile eingesetzt werden können. Die Erfindung bezieht sich ferner auf ein unter Verwendung dieses Bauprofilsatzes gebautes Gerippe. Ein solcher Bauprofilsatz gemäß dem Oberbegriff des Anspruchs 1 ist z.B. der FR-A-1,551,518 zu entnehmen.

Bisher hat man beim bau eines Kastengerippes für die den Heckrahmen mitbildenden Eckpfosten Rechteckrohre eingesetzt, was jedoch mit Nachteilen verschiedener Art verbunden war: es ist nämlich so, dass die beim Fahren auftretenden Verwindungen des Kastens zu Beanspruchungen führen, die sich am stärksten in Form von Querbeanspruchungen in der Ebene des Heckrahmens auswirken. Wenn der Kasten hinten durch eine Wandfüllung geschlossen ist, wirkt diese gleichzeitig als Versteifung für den Heckrahmen. Meistens ist aber der Kasten hinten mit einer ein- oder zweiflügeligen Türe, einem Rolladen od. dgl. ausgestattet. Die Steifigkeit des Heckrahmens hängt dann massgeblich von den Eckverbindungen zwischen den Eckpfosten und dem Obergurt und vor allem dem Untergurt ab. Diese Eckverbindungen sind deshalb entsprechend stark zu gestalten. Sie können durch Schweissen oder durch mechanische Mittel realisiert werden.

Bei Aluminiumkonstruktionen verursachen aber Verschweissungen der Bauteile untereinander eine Schwächung der Profile durch Erweichen. Im weiteren müssen die Profile nachträglich wieder gerichtet und danach noch verputzt werden. Dies bedeutet viel Nacharbeit und ausserdem verbleibende Eigenspannungen in den Profilen.

Bei mechanischen Eckverbindungen mittels durch die Eckpfosten gesteckten Schraubenbolzen, und zwar sowohl bei Stahlwie bei Aluminiumkonstruktionen, sind in die Rechteckrohre Füllstücke einzuschieben, damit diese Rohre nicht zerdrückt werden. Im weiteren springen die Verbindungsbolzen aussen vor. Gegebenenfalls ist der Einsatz weiterer sichtbarer Verstärkungen erforderlich.

In einem Kastengerippe kann ausser den erwähnten Eckpfosten der Einsatz von Hohlprofilen auch für weitere Gerippeteile zweckmässig sein, was aber wiederum gleichartige Verbindungsprobleme stellt.

Somit verursacht die Verwendung von Rechteckrohren oder sonstigen Hohlprofilen als Eckpfosten oder als weitere Bestandteile des Gerippes verschiedenartige Schwierigkeiten und Nachteile, und zwar sowohl bei der eigentlichen Montage wie auch am fertigen Kasten.

Im Hinblick darauf hat sich der Erfinder als Ziel gesetzt, Bauprofile neuer Gestaltung zu entwickeln, dank welchen die Montage erleichtert wird und verschiedene weitere Vorteile erreicht werden.

Zur Lösung dieser Aufgabe führt ein Bauprofilsatz, der auch die kennzeichnenden Merkmale des kennzeichnenden Teiles des Anspruchs 1 aufweist.

Beim Bau des Kastengerippes wird das U-förmige Grundprofil mit nach aussen zugewandter Kehle eingebaut, vorzugsweise mit dem Profilboden parallel zu den Kastenlängswänden gerichtet. Dies gestattet, das Verbinden zwischen den als Untergurt bzw. als Obergurt eingesetzten Querprofilen und den als Pfosten eingesetzten Grundprofilen an deren Boden vorzunehmen, d.h. an einem vollwandigen, gut zugänglichen Profilteil, insbesondere unter Zuhilfenahme von Verbindungsstücken wie Winkelstücken und gegebenenfalls von in der Kehle eingelegten Verstärkungselementen. Aehnlich wird mit als weitere Bestandteile des Gerippes eingesetzten U-förmigen Grundprofilen verfahren.

Erst wenn diese Verbindungsarbeiten erledigt sind und gegebenenfalls weitere Einrichtungen, wie z.B. elektrische Leitungen in der Kehle des Grundprofils montiert sind, wird die Kehle des Grundprofils durch Verlegen des von aussen montierten Abdeckprofils abgeschlossen, wodurch alle Befestigungs- und Verstärkungsmittel sowie sonstige in der Profilkehle angebrachten Einrichtungen gegen aussen versteckt werden.

Die in dieser Art gebauten Geripppe sind für feste oder kippbare oder noch bewegliche, gedeckte oder ungedeckte Kasten geeignet.

Im Sinne der Erfindung werden unter dem Begriff "U-förmiges Grundprofil" sowohl konventionelle einfache U-Profile mit vollwandigem Boden und Schenkeln wie auch solche bei denen mindestens einer der Schenkel als Hohlkörper ausgebildet ist, verstanden. Im weiteren können diese Grundprofile mit mindestens einem Seitenflansch versehen sein, insbesondere als Auflagefläche für eine Wandfüllplatte.

Die Erfindung soll nun nachstehend in ihren Einzelheiten anhand der in den Figuren abgebildeten Ausführungsbeispielen näher beschrieben werden, unter anderen in bezug auf verschiedene Varianten für die Befestigung des Abdeckprofils an den Schenkeln des Grundprofils.

Es zeigen:

Fig. 1:       einen Nutzfahrzeugkasten in perspektivischer Darstellung, von hinten gesehen

Fig. 2:       der entsprechende Eckrahmen in perspektivischer, explodierter Darstellung

Fig. 3 bis 7: verschiedene Ausführungsformen und Weiterentwicklungen des als Eckpfosten in einem Heckrahmen eingesetzten Bauprofilsatzes im Querschnitt oberhalb eines Scharnierstücks

Fig. 8: eine Anwendung des Bauprofilsatzes nach Fig. 7 als Obergurt, mit angeschlossenem Dachteil, im Querschnitt.

Fig. 9 bis 10: verschiedene Ausführungsformen eines als Obergurt eines offenen Kastens eingesetzten Bauprofilsatzes im Querschnitt.

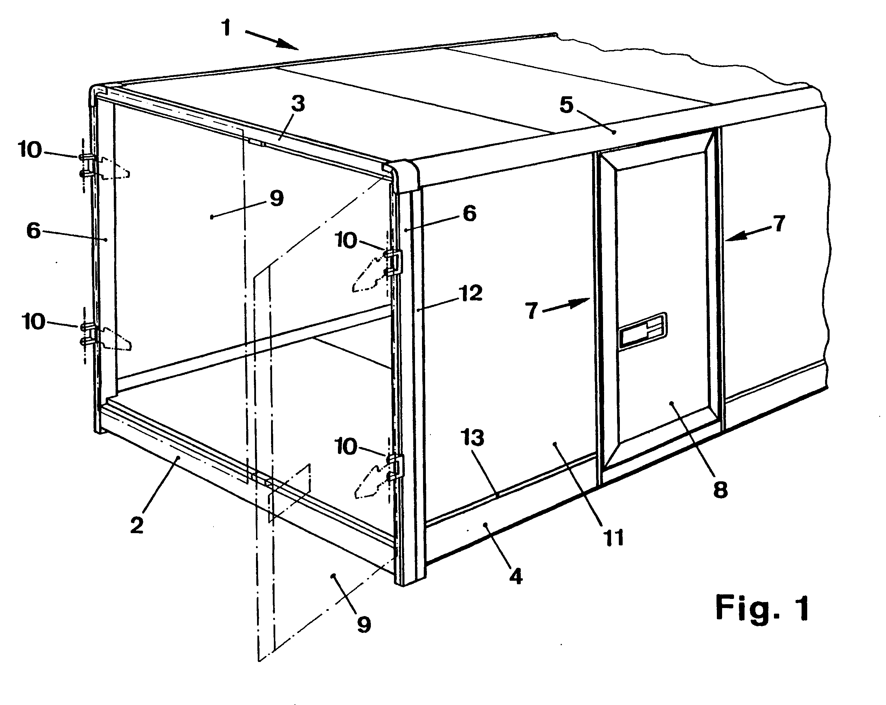

In Figur 1 ist der allgemeine Aufbau des hinteren Teils eines Fahrzeugkastens 1 veranschaulicht. Dessen Gerippe umfasst im wesentlichen das untere und das obere Quergurtprofil 2 bzw. 3, die unteren und oberen Längsgurtprofile 4 bzw. 5, die hinteren Eckpfosten 6 und gegebenenfalls Zwischenpfosten 7, z.B. zur Bildung eines Türrahmens für eine Seitentüre 8. Im dargestellten Beispiel ist die Kastenheckseite offen und kann durch zwei in der Figur gestrichelt angedeutete Türflügel 9 geschlossen werden, für welche Scharniere 10 an den hinteren Eckpfosten 6 angebracht sind. Die eigentlichen Kastenlängswände sind durch Füllplatten 11 gebildet, welche an Seitenflansche 12 der Eckpfosten 6, bzw. 13 des Untergurtprofils 4 sowie am Rande des Obergurtprofils 5 angelegt und befestigt sind.

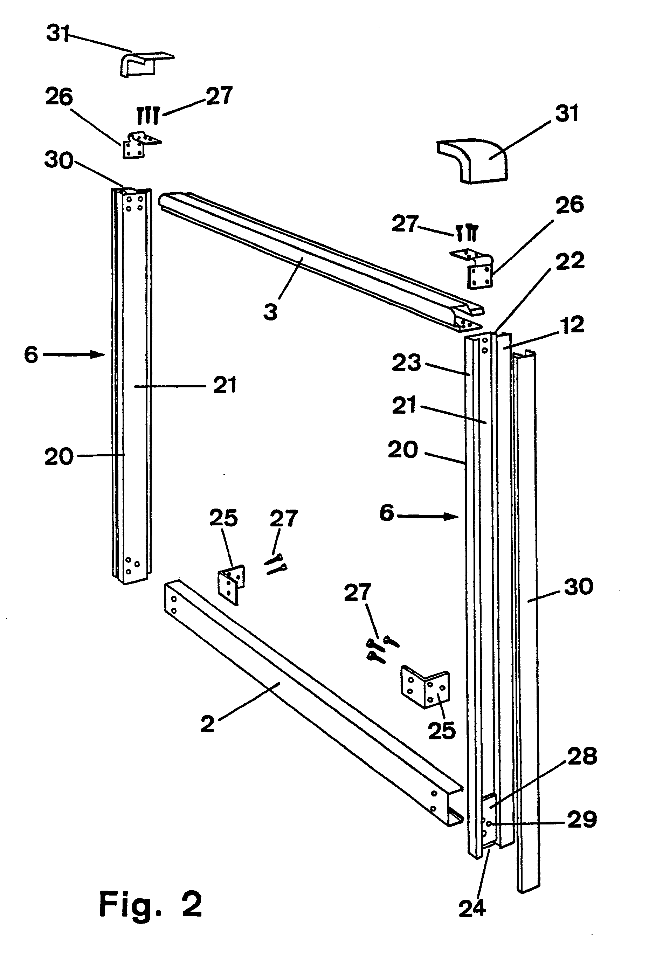

Wie in Figur 2 eingehender gezeigt, bestehen beim dargestellten Heckrahmen die vertikalen Eckpfosten 6 aus erfindungsgemässen U-förmigen Grundprofilen 20 mit Boden 21 und Schenkeln 22 und 23, wobei diese Profile 20 mit nach aussen offener Kehle 24 montiert sind, und zwar vorzugsweise derart, dass der Boden 21 der U-Profile parallel zu den Kastenlängswänden liegt. Diese Grundprofile 20 sind am Schenkel 22 mit dem als Auflagefläche für die Wandfüllplatten 11 dienenden Seitenflansch 12 versehen.

Dank ihrer Gestalt als offene Profile können die U-förmigen Grundprofile 20 an ihrem Boden 21 leicht und einwandfrei mittels Verbindungsstücke, z.B. Winkelstücke 25-26, und Schraubenbolzen 27 mit dem unteren bzw. dem oberen Quergurtprofil 2 bzw. 3 verbunden werden, welche hier als U-Profile gestaltet sind. Dabei kann nötigenfalls in der Kehle 24 des Grundprofils 20 eine Verstärkungsplatte 28 mit Bohrungen 29 für die Schraubenbolzen 27 angeordnet werden. Diese Verstärkungsplatte 28 bietet die Auflagefläche für die Schraubenmutter oder aber den Kopf der Schraubenbolzen 27. Gegebenenfalls können die Bohrungen 29 mit einem Innengewinde für die Schraubenbolzen 27 versehen werden.

Nach erfolgtem Zusammenbau des Gerippes, bzw. des Kastens, werden an den Grundprofilen 20 die Abdeckprofile 30 montiert, wie weiter unten anhand der nächsten Figuren näher beschrieben, sowie in den oberen Ecken und als Abschluss, die Eckstücke 31.

Diese Gestaltung eines Bestandteils des Gerippes, insbesondere des Eckpfostens, als U-förmiges Grundprofil mit zugehörigem Abdeckprofil bringt verschiedene Vorteile mit sich: Bedingt durch die Fabrikationsart hat ein Profil über seiner Länge immer den gleichen Querschnitt, was auch für die hier in Rede stehenden Grundprofile zutrifft. Im vorliegenden Fall eines Pfostenprofils 6 wirken sich die in der Praxis, d.h. beim Fahren auftretenden Querspannungen über seine Länge nicht regelmässig verteilt, sondern im Bereich der Eckverbindungen, vor allem im Bereich der Eckverbindung mit dem Untergurtprofil 2 konzentriert aus. Deshalb erweist sich die Anordnung der erwähnten Verstärkungsplatte 28 in der Eckverbindung für die Steifigkeit des Querrahmens als zweckmässig.

Beim in Fig. 2 dargestellten Beispiel ist diese Platte 28 etwa auf der Höhe der eigentlichen Eckverbindung beschränkt und verteilt die durch die Verbindungsbolzen 27 ausgeübten Kräfte. Nötigenfalls kann aber die Verstärkungsplatte 28 länger bemessen sein und zusätzlich im Abstand von der eigentlichen Eckverbindung am Boden 21 des Grundprofils 20 befestigt werden. Im weiteren kann die Verstärkungsplatte 28 auch aus einem anderen Material als das Grundprofil 20 bestehen, insbesondere aus Stahl bei einem Grundprofil 20 aus Aluminium. Dies gestattet, das Grundprofil 20 möglichst schlank und materialsparend zu gestalten und trotzdem dank einer richtig bemessenen Verstärkungsplatte 28 die benötigte Stabilität der Eckverbindung und somit die Steifigkeit des Querrahmens sicherzustellen.

Falls sich erst beim praktischen Einsatz des Kastens das Anbringen einer Verstärkungsplatte 28 bzw. das Auswechseln gegen eine stärkere Platte als erforderlich erweist, so kann diese in einfacher Art, nach Entfernen des Abdeckprofils 30 montiert werden. Auf ebenso einfacher Weise lassen sich allfällige Reparaturarbeiten am Kastengerippe und bei Zubehörteilen durchführen.

In der Ebene der Längswände tragen die Wandfüllplatten 11 dazu bei, die Eckpfosten 6 rechtwinklig zu den Längsgurten zu halten. Die Verbindung der Längsgurten 4-5 mit dem Eckpfosten-Grundprofil 20 kann daher z.B. an dessen Seiten flansch 12 erfolgen. Eine weitere Möglichkeit besteht z.B. darin, der eine Schenkel der Winkelstücke 25 und/oder 26 bis hinter die Längsgurte zu verlängern und letztere daran zu befestigen, oder noch eine Verbindungslasche zu verwenden.

Beim beschriebenen Bauprofilsatz wird also die Hauptlast durch das als Bestandteil des Gerippes einbebaute U-förmige Grundprofil 20 aufgenommen. Die Fixierung des komplementären Abdeckprofils 30 darf daher minimal bleiben, wobei dazu Sekundär-Bauteile wie z.B. Winkelstücke, Scharnierstücke und dgl. herangezogen werden können.

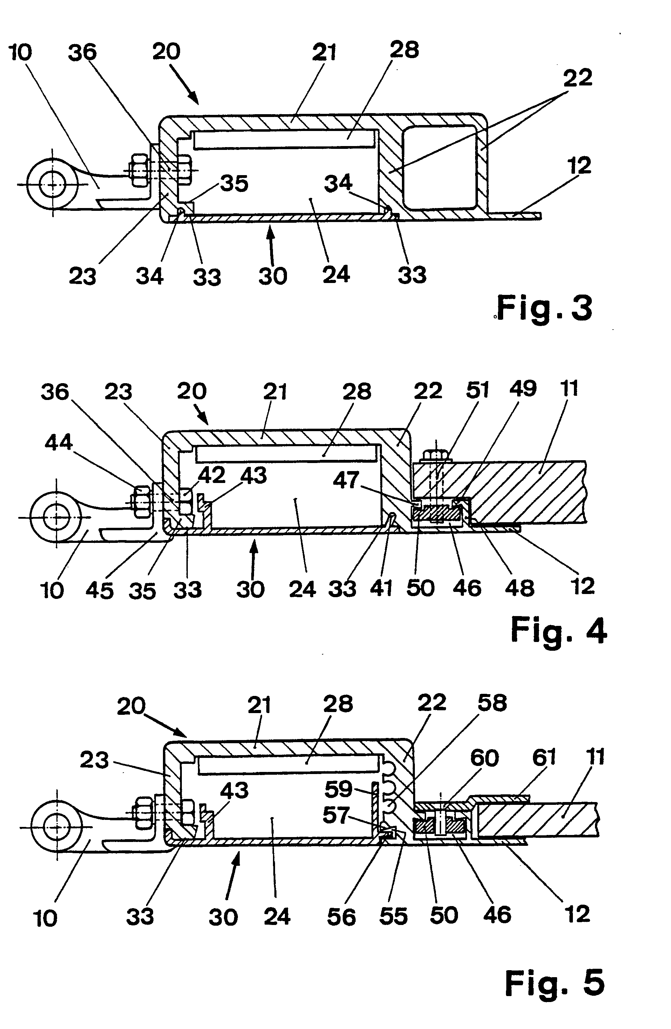

Verschiedene Ausführungsformen des erfindungsgemässen Bauprofilsatzes, insbesondere bezüglich Fixierung des Abdeckprofils an die Schenkel des Grundprofils sollen nun anhand der weiteren Figuren 3 bis 7 im Einzelnen beschrieben werden, und zwar am Beispiel eines als hinterer Eckpfosten 6 eingesetzten Grundprofils 20 mit Boden 21 und Schenkeln 22 und 23, wie in Figur 2 gezeigt. Es handelt sich bei diesen Figuren um Querschnitte auf etwa Mittelhöhe des Eckpfostens, mit Draufsicht auf das untere Scharnierstück 10 und auf die Verstärkungsplatte 28.

Am Schenkel 22 des Grundprofils 20 schliesst sich die Längswandfüllplatte 11 an; der andere Schenkel 23 gehört praktisch bereits zur hinteren Seite des Kastens 1 und ist also von aussen zugänglich.

Am Ausführungsbeispiel nach Fig. 3 ist gezeigt, dass mindestens der eine Schenkel, z.B. der Schenkel 22 zur Versteifung des Grundprofils 20 als Hohlkörper ausgebildet werden kann. Dieser Schenkel weist einen Seitenflansch 12 auf, der als Auflagefläche für den Rand einer nicht eingezeichneten Wandfüllplatte 11 bestimmt ist.

Zur Aufnahme des Abdeckprofils 30 weisen die Schenkel 22 und 23 Auflageflächen 33 auf, die vorzugsweise versenkt sind, damit das Abdeckprofil 30 gegenüber den restlichen von aussen sichtbaren Flansch der Schenkel 22 und 23 nicht vorspringt. In diesen Versenkungen kann das Abdeckprofil 30 z.B. durch Verschrauben oder Verkleben mit speziellen Klebstoffen befestigt werden. Vorteilhafterweise kann aber das Abdeckprofil 30, wie abgebildet, auf seiner Rückseite mit Längsnocken 34 versehen sein, welche in entsprechenden, in den Auflageflächen 33 ausgebildeten Rillen einklipsbar sind.

Der äussere Schenkel 23 des Grundprofils 20 ist vorteilhafterweise an seinem freien Rand zwecks Versteifung mit einem kurzen, gegen die Kehle 24 hin gerichteten Flansch 35 versehen. An diesem Schenkel 23 können die Scharnierstücke 10 für die Hecktürflügel 9 bei noch offener Kehle 24 mittels Schraubenbolzen 36 befestigt werden.

Eine Weiterbildung des Bauprofilsatzes zeigt Figur 4. Hier sind beide Schenkel 22 und 23 des Grundprofils 20 vollwandig. Beide Schenkel 22 und 23 weisen wiederum eine vorteilhafterweise versenkte Auflagefläche 33 für das Abdeckprofil 30. An seinem dem Schenkel 22 entsprechenden Rand ist nun das Abdeckprofil 30 auf seiner Rückseite mit einer im Querschnitt schrägen, gegebenenfalls aus Gründen der Montage noch bogenförmigen Halterippe 41 versehen, welche in einer entsprechenden, in der versenkten Auflagefläche 33 des Schenkels 22 geformte Rinne einhakt. An seinem anderen Längsrand ist die Wand des Abdeckprofils 30 rückwärts gebogen und reicht damit fluchtend bis in die äussere Seitenfläche des Schenkels 23, bei welchem die versenkte Auflagefläche 33 sich ebenfalls so weit erstreckt.

Anhand dieser Figur 4 lässt sich eine weitere Möglichkeit zur Festhaltung des Abdeckprofils 30 unter Zuhilfenahme der Scharnierstücke 10 bzw. von Winkelstücken oder -profilen erläutern.

Hierzu sind im Schenkel 23 in der Nähe des Flansches 35 Durchgangsbohrungen für die Schraubenbolzen 36 angebracht, und zwar so nahe daran, dass der Kopf 42 der vor Anbringen des Abdeckprofils 30 eingesteckten Schraubenbolzen 36 an den Flansch 35 anliegt und somit gegen Verdrehen gesichert ist. Um ein späteres Herausfallen der eingesteckten Schraubenbolzen 36 zu verhindern, wird ein Abdeckprofil 30 verwendet, das einen bis über die Schraubbolzenköpfe reichenden Arretierungsflansch 43 aufweist. Anschliessend und nach Verlegen des Abdeckprofils 30 werden die mit Bohrungen versehenen Scharnierstücke 10 angebracht und mit den Schraubenmuttern 44 von aussen festgemacht, wodurch diese Scharnierstücke 10 durch ihre winkelförmige Grundplatte 45 das Abdeckprofil 30 fixieren. Falls wegen Zollvorschriften erforderlich, können diese Muttern 44 sichtbar verschweisst werden. Neben den Scharnierstücken 10, oder an ihrer Stelle, können auch einfache Winkelstücke oder -profile zur Halterung des Abdeckprofils analog eingesetzt und zum Beispiel in gleicher Art befestigt werden.

Sobald das Abdeckprofil 30 durch das Scharnierstück 10, bzw. durch Winkelstücke fixiert ist, kann es sich auch an seinem anderen Längsrand wegen seiner schrägen einhakenden Halterippe 41 von seinem Sitz auf den Schenkel 22 nicht mehr lösen.

In der Figur 4 ist ferner eine Möglichkeit zur Befestigung der Wandfüllplatte 11 am Grundprofil 20 gezeigt. Hierzu ist im durch den Schenkel 22 und den an dessen freien Rand angeschlossenen Seitenflansch 12 gebildeten Winkel eine hinterschnittene Rinne 46 erzeugt, welche durch eine am Schenkel 22 mitgepresste Nase 47 und eine am Seitenflansch 12 mitgepresste Rippe 48 mit Nase 49 gebildet ist.

Diese Rinne 46 dient zur Halterung der in Draufsicht parallelogrammförmigen Mutter 50 eines Schraubbolzens 51, der durch eine Abstufung des auch am Seitenflansch 12 anliegenden Randes der Füllplatte 11 gesteckt ist.

Eine weitere Ausführungsform ist in der Figur 5 dargestellt. Dort weist der Schenkel 22 des Grundprofils 20 eine in seiner der Kehle 24 zugewandten Seitenfläche mündende Aufnahmerinne 55 auf. Seinerseits ist das Abdeckprofil 30 an seinem dem Schenkel 22 entsprechenden Längsrand mit einer zurückversetzten, parallel zu dessen Hauptwand verlaufenden Halterippe 56 versehen. Bei diesem Schenkel 22 erfolgt die Fixierung des Abdeckdeckels 28 durch Einführen der Halterippe 56 in die Rinne 55. Mit seinem anderen Längsrand liegt das Abdeckprofil 30 auf eine versenkte Auflagefläche 33 des Schenkels 23 und wird in gleicher Art mit dem Scharnierstück 10 fixiert, wie anhand des Ausführungsbeispiels nach Figur 4 erläutert. Wenn dazu das Abdeckprofil 30 ebenfalls einen Arretierungsflansch 43 aufweist, so muss es für das Einrasten der Rippe 56 in die Rinne 55 schräg zum Grundprofil 20 gehalten werden. Dementsprechend ist die dem Grundprofilboden 21 nächstliegende Wand 57 der Rinne 55 schräg gestellt. Diese Massnahme kann entfallen, wenn das Abdeckprofil 30 keinen Arretierungsflansch 43 aufweist und die eingesteckten Schraubenbolzen 36 auf irgendeiner anderen Art bis zum Anbringen ihrer Mutter 44 gehalten werden.

An diesem Ausführungsbeispiel ist auch gezeigt, dass in einem Schenkel des Grundprofils 20, vorzugsweise im Schenkel 22, Längskanäle 58 vorgesehen werden können, in welche Zubehöre wie z.B. elektrische Leitungen verlegt werden können. Das Abdeckprofil 30 kann dann mit einem Flansch 59 versehen sein, der im montierten Zustand als Deckel für die Kanäle 58 wirkt.

In der Figur 5 ist auch eine weitere Möglichkeit zur Fixierung der Wandfüllplatte 11 gezeigt, und zwar für eine dünnere Füllplatte. Der Seitenflansch 12 ist wieder wie beim Beispiel nach Figur 4 mit einer hinterschnittenen Rinne 46 versehen. Daran lassen sich durch Schrauben 60 und Muttern 50 Laschen 61 fixieren, welche den Rand der Füllplatte 11 gegen den Seitenflansch 12 verspannen.

Bei den Ausführungsformen nach Figuren 4 und 5 muss jedoch das Abdeckprofil 30 nicht unbedingt die Schmalseite des Schenkels 23 wie gezeichnet total zudecken. Das Abdeckprofil 30 kann ebensogut schmaler sein, und, wie in Figur 3 gezeigt, nur einen Teil der Schmalseite des Schenkels 23 decken. Zur Fixierung des Abdeckprofils muss dann das Scharnierstück eine winkelige Grundplatte 45 aufweisen, die bis über den Rand des Abdeckprofils reicht, und/oder es werden so dimensionierte Winkelstücke oder -profile verwendet.

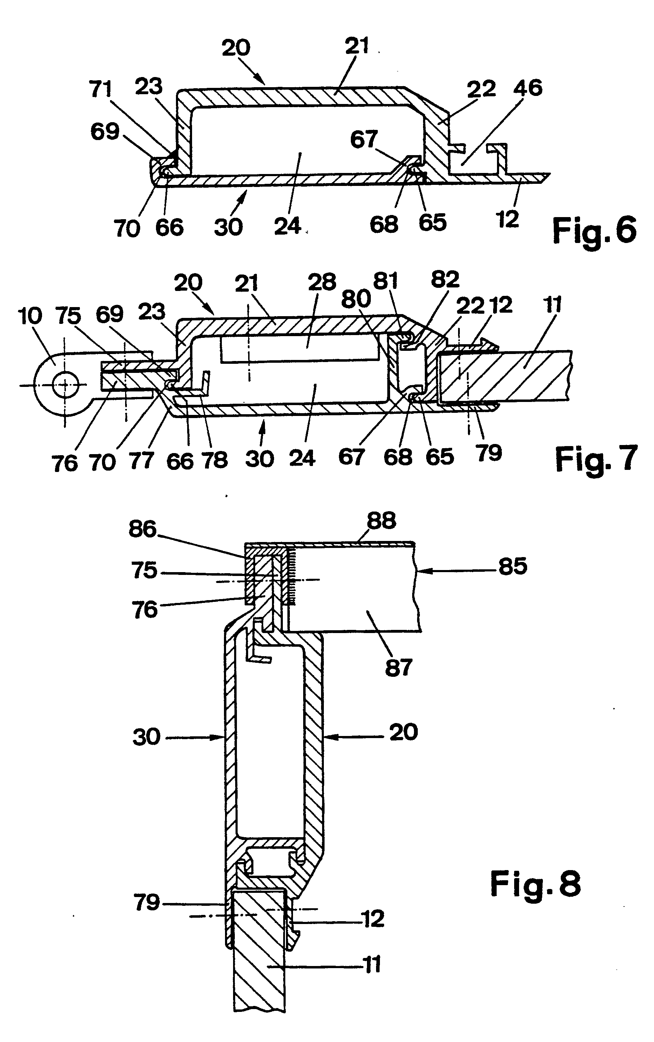

Es ist ferner möglich, wie am Ausführungsbeispiel nach Figur 6 gezeigt, für die Verankerung des Abdeckprofils 30 ein Zusammenwirken von Rinnen und von darin einrastenden Halterippen an beiden Schenkeln 22 und 23 des Grundprofils 20, bzw. beiden Längsrändern des Abdeckprofils 30 vorzusehen.

Nach diesem Prinzip weist das Grundprofil 20 am Schenkel 22 eine gegen die Profilkehle 24 gerichtete Rippe 65 und am Schenkel 23 eine nach aussen gerichtete Rippe 66 auf. Das zugehörige Abdeckprofil 30 weist an seinem dem Schenkel 22 entsprechenden Längsrand, auf seiner Rückseite, einen Winkelflansch 67 auf, welcher mit der Hauptwand des Abdeckprofils eine Rinne 68 bestimmt. An seinem anderen Längsrand ist das Abdeckprofil 30 als Haken 69 gestaltet, dies unter Bildung der Rinne 70. Zur Verankerung wird das Abdeckprofil 30 parallel zu seiner Hauptwand verschoben, wobei die Rippen 65 und 66 in die Rinnen 68 bzw. 70 einrasten. Anschliessend kann ein Herausgleiten des Abdeckprofils 30 z.B. durch Schweiss- oder Lötpunkte oder -nähte 71 im nicht auffälligen Winkel zwischen Haken 69 und Schenkel 23 verhindert werden. Am freibleibenden Teil des Schenkels 23 kann vor dem Aufsetzen des Abdeckprofils 30 d.h. bei noch offener Profilkehle 24, ein Scharnierstück, wie anhand von Figur 3 erläutert, fixiert werden.

Im weiteren ist das Grundprofil 20 für die Befestigung der Wandfüllplatte mit einem Seitenflansch 12 mit hinterschnittener Rinne 46 versehen.

In der Figur 7 ist eine Weiterentwicklung der Ausführungsform nach Figur 6 dargestellt. Dort weist das Grundprofil 20 an seinem Schenkel 23 neben der Rippe 66 noch einen nach aussen, parallel zum Profilboden 21 gerichteten Flansch 75 auf. An seinem entsprechenden Längsrand weist das Abdeckprofil 30 in Verlängerung des Hakens 69 nach aussen einen Flansch 76 auf, welcher im montierten Zustand am Flansch 75 des Schenkels 23 anliegt. Die endgültige Fixierung des Abdeckprofils kann dann durch Verbinden der beiden Flansche 75 und 76 aneinander, z.B. Verkleben, Verschrauben und dgl. erfolgen.

Das durch die beiden Flansche 75 und 76 zustande gebrachte Gebilde kann aber auch für die Fixierung eines Scharnierstückes 10 dienen. Dabei kann dieses Scharnierstück 10 ein U-förmiges Fixierungsteil aufweisen und, wie dargestellt, auf die Flansche 75 und 76 aufgestülpt werden. Damit das Scharnierstück 10 seitlich nicht vorspringt, weist das Abdeckprofil 30 an seinem dem Schenkel 23 entsprechenden Längsrand eine Schulter 77 auf, wobei zur Bildung der Rinne 70 auf der Rückseite des Abdeckprofils 30 noch einen Innenflansch 78 vorgesehen ist.

Anhand der Figur 7 lässt sich ferner noch eine weitere Möglichkeit zum Anbringen und Festlegen der Wandfüllplatte 11 erläutern: der Seitenflansch 12 ist jetzt nicht mehr am freien Rand des Schenkels 22, sondern im Abstand davon angeordnet, derart, dass die Füllplatte 11 von aussen her montiert werden kann. Das Abdeckprofil 30 ist dann mit einem seitlichen Vorsprung 79 versehen, der dazu bestimmt ist, im montierten Zustand über den Rand der Füllplatte 11 zu greifen und diesen gegen den Seitenflansch 12 zu halten. Es ist dann vorteilhaft, eine Doppelverankerung des Abdeckprofils 30 am Schenkel 22 zu gewährleisten. Hierzu ist das Abdeckprofil 30 auf seiner Rückseite mit einem zweiten abgeköpften Halteflansch 80 versehen, deren Abköpfung 81 dazu bestimmt ist, hinter einer zweiten Rippe 82 des Schenkels 22 einzugreifen. In Abweichung von der dargestellten Ausführungsform kann auch dieser zweite Halteflansch 80 auch kürzer sein und nicht bis zum Grundprofilboden 21 reichen.

Die Figur 8 zeigt eine andere Anwendung des erfindungsgemässen Bauprofilsatzes, nämlich als Obergurt 5 und zwar im speziellen Fall eines Grundprofils 20 und eines Abdeckprofils 30 der gleichen Art, wie bei der Ausführungsform nach Fig. 7. Die Wandfüllplatte 11 lässt sich dann ebenfalls von aussen montieren und an ihrem oberen Rand durch den seitlichen Vorsprung 79 des Abdeckprofils 30 am Seitenflansch 12 festhalten. Die aneinanderliegenden Aussenflansche 75 und 76 werden dann für die Montage und Fixierung der Bedachung 85 ausgenützt. Dabei lässt sich das Dach aus U-förmigen Aufsteckprofilen 86, Querspriegeln 87 und Verschalung 88 vorfabrizieren. Das fertige Dach wird dann einfach durch Aufstülpen der Profile 86 auf die aneinanderliegenden Flansche 75 und 76 montiert und fixiert.

Der Bauprofilsatz lässt sich ferner bei der Herstellung des Rahmens einer Seitentüre 8 nach Fig. 1 einsetzen, insbesondere für dessen Pfosten 7. Weil dann der eine Schenkel des Grundprofils von aussen frei zugänglich ist, kann im wesentlichen irgendeine der Ausführungsformen und Varianten für die Festlegung des Abdeckprofils nach den Figuren 3 bis 7 zur Anwendung kommen.

Ferner kann es je nach Kastengrösse bzw. -Belastung zweckmäsig werden, in der Kastenlänge als Versteifung einen oder mehreren Querrahmen anzuordnen. Auch für solche Zwischenrahmen kommt der Einsatz des beschriebenen Bauprofilsatzes 20 + 30, gegebenenfalls zusammen mit in der Kehle des Grundprofils 20 versteckten Verstärkungselemente 28, in Betracht. Bei vollen Längswänden stossen dann Wandfüllplatten 11 an beiden Seiten des Grundprofils 20 an, das also an beiden Schenkeln 22 und 23 mit einem Seitenflansch 12 versehen wird. Weil dann beide Schenkel 22, 23 des Grundprofils 20 von der Seite her nicht mehr zugänglich sind, kommt für das Grundprofil 20 und das Abdeckprofil 30 nur noch eine Gestaltung und Fixierungsart des Abdeckprofils 30 der Art, wie anhand von Figur 3 beschrieben, in Betracht.

Bei den beschriebenen Ausführungsbeispielen sind Grundprofile 20 berücksichtigt worden, die mit eine m Seitenflansch 12 versehen sind, weil dies für die Montage und die Fixierung der Wandfüllplatten 11 die günstigste Lösung darstellt. Zur Erfindung gehören aber auch Grundprofile 20, die keinen Seitenflansch 12 aufweisen. Die Vorteile hinsichtlich Verbinden mit anderen Gerippebestandteilen bleiben auch dann erhalten. Die Wandplatten 11 sind dann in anderer Weise zu montieren und zu befestigen, indem sie z.B. mit einem Randprofil mit vorstehendem Flansch versehen werden, durch welchen die Fixierung am Grundprofil 20 erfolgt.

Ferner sind in den beschriebenen Ausführungsbeispielen Konstruktionen berücksichtigt worden, bei denen das Grundprofil 20 im Gerippe so plaziert ist, dass sein Boden 21 auch für den Heckrahmen parallel zu den Kastenlängswänden liegt, weil sich dadurch für einen zur Aufnahme von Hecktüren bestimmten Rahmen die grösste Lichtbreite ergibt. Auf Kosten dieser Lichtbreite ist es jedoch im Rahmen der Erfindung ebenfalls möglich, für den Heckrahmen, die Grundprofile mit parallel zur Heckrahmenebene liegendem Boden 21 zu montieren. Dabei wird der Grundprofilboden 21 direkt am Boden der Quergurtprofile 2 und 3 nach Fig. 2 gelegt und daran mittels Schraubenbolzen fixiert, gegenenenfalls unter Einsatz eines in der Profilkehle 24 eingelegten Verstärkungselementes 28. Einen Aussenflansch zur Aufnahme der Füllplatten der Längsseitenwände kann dann am Profilboden 21, senkrecht dazu, angeordnet werden. Auch in einem solchen Fall bleiben die Vorteile der Erfindung erhalten, da das Verbinden am vollwandigen Boden 21 des Grundprofils 20 erfolgen kann und die Verbindungsbolzen sowie allfällige Verstärkungselemente und sonstige Zubehöre durch das nachträgliche Anbringen des Abdeckprofils 30 versteckt werden.

Neben den beschriebenen Anwendungsmöglichkeiten bei geschlossenen bzw. gedeckten Kasten lässt sich der erfindungsgemässe Bauprofilsatz ebenfalls für das Gerippe von offenen, d.h. dachlosen Kasten, z.B. Mulden, einsetzen, welche auch kippbar sein können. Mit den anschliessenden Ausführungsbeispielen soll gezeigt werden, wie in solchen Fällen der Bauprofilsatz für dessen Einsatz als den oberen Rand des Seitenwänden bildenden Obergurt verwendet bzw. gestaltet werden kann.

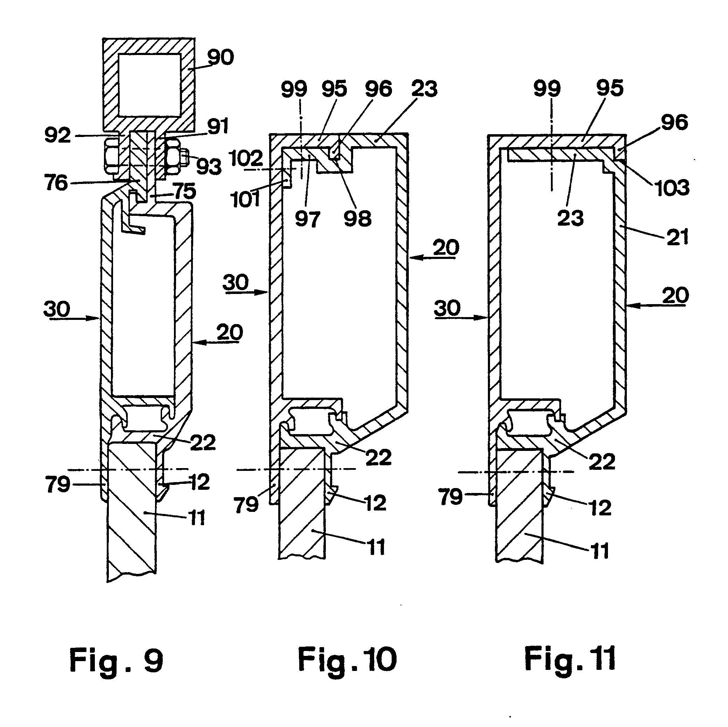

Beim Ausführungsbeispiel nach Fig. 9 sind Grundprofil 20 und Abdeckprofil 30 ähnlich wie bei den Beispielen nach Fig. 7 als Eckpfosten und nach Fig. 8 als Obergurt verwendbar, dies mit dem Vorteil, dass man mit einer einheitlichen Profilart auskommt. Die beiden aneinanderliegenden Flansche 75-76 können wieder mittels eines einfachen verschraubten U-Profils 86 nach Fig. 8 zusammen fixiert werden. Ein besserer oberer Abschluss der Wand wird jedoch erreicht, wenn als Einfassprofil ein rechteckiges Hohlprofil 90 verwendet wird, das auf der einen Seite zwei parallele, das U-Profil 86 nachbildende Flansche 91 und 92 aufweist, an welche die Fixierung an den Flanschen 75-76 mittels Schraubbolzen 93 od. dgl. erfolgt.

Als oberster exponierter Wandabschluss, z.B. bei einer Mulde, wirkt ein solches Einfassprofil 90 als Verschleissprofil, kann aber auch als Führungsschiene für bewegliche Dachpartien dienen.

Bei den Ausführungsbeispielen nach Figuren 10 und 11 sind Grundprofil 20 und Abdeckprofil 30 so gestaltet, dass sie an sich allein eine saubere, glatte obere Fläche des als Obergurt eines offenen Kastens oder einer Mulde eingesetzten Bauprofilsatzes bilden.

Hierzu weist beim Beispiel nach Fig. 10 das Abdeckprofil 30 an seinem äusseren Längsrand einen Schenkel 95 mit Nase 96 auf, welcher Schenkel 95 auf einen entsprechend der Dicke dieses Schenkels 95 zurückversetzten Teil 97 des freien Schenkels 23 des Grundprofils 20 übergreift, wobei die Nase 96 in einer Rinne 98 des Schenkelteils 97 einrastet. Nach Montage des Abdeckprofils 30 kann dieses von oben her am Schenkelteil 97 verschraubt werden, wie mit der strichpunktierten Linie 99 angedeutet. Es ist ferner auch möglich, den Schenkelteil 97 an einem freien Rand mit einem Innenflansch 101 zu versehen und das montierte Abdeckprofil 30 von der Seite her daran zu verschrauben, wie mit der strichpunktierten Linie 102 angedeutet.

Bei der Ausführungsform nach Fig. 11 weist das Abdeckprofil 30 ebenfalls einen Schenkel 95 auf, der aber hier die gesamte Breite des Schenkels 23 des Grundprofils 20 überdeckt. Dabei ist der Schenkel 95 mit einer Nase 96 versehen, welche im montierten Zustand in einer Abstufung 103 des Schenkels 23 des Grundprofils 20 greift und mit dessen Boden 21 fluchtet.

Die Fixierung des montierten Abdeckprofils 30 kann von oben her durch Verschrauben erfolgen, wie mit der strichpunktierten Linie 99 angedeutet.

Dank einer solchen Gestaltung wird das Grundprofil 20 von oben her durch den als Verschleisselement wirkenden Schenkel 95 des Abdeckprofils 30 geschützt. Bei allfälligen Beschädigungen lässt sich das Abdeckprofil 30 leicht ersetzen, und zwar ohne Eingriff an dem im Gerippe integrierten Grundprofil 20.

Bei den drei in den Figuren 9 bis 11 abgebildeten Beispielen weist der andere Schenkel 22 des Grundprofils 20, im Abstand von seinem freien Rand, einen Aussenflansch 12 auf, als Abstützung für eine von aussen her montierte Wandfüllplatte 11, wobei das mit einer Doppelverankerung an diesem Schenkel 22 fixierten Abdeckprofil 30 zur Halterung der Wandfüllplatte 11 einen seitlichen Vorsprung 79 aufweist, wie anhand von Fig. 7 im Detail beschrieben.

Es versteht sich von selbst, dass bei solchen Anwendungen des Bauprofilsatzes als Obergurt eines offenen Kastens der Aussenflansch 12 auch im freien Rand des Schenkels 22 angeordnet und die Wandfüllplatte 11 von innen montiert und fixiert werden kann, wie anhand der Figuren 3 bis 6 erläutert.

In allen Fällen bleibt auch bei dieser besonderen Anwendung des Bauprofilsatzes der Vorteil erhalten, dass bei der Konstruktion des eigentlichen Gerippes die Verbindung der Grundprofile 20 untereinander bzw. an weitere Profile an vollwandigen Teilen davon vorgenommen werden kann und die Verbindungsmittel durch nachträgliches Anbringen des Abdeckprofils 30 versteckt werden.

## Ansprüche

1. Bauprofilsatz für ein Gerippe eines Kastens eines Nutzfahrzeugs, insbesondere dessen Heckrahmen, bestehend aus zwei komplementären Profilen, nämlich einem U-förmigen Grundprofil (20) mit einer nach aussen offenen Kehle (24) und Profilboden (21) und einem zweiten Profil (30), welches nachträglich an die Schenkel (22,23) des Grundprofils (20) festlegbar ist,

   dadurch gekennzeichnet,

   dass das Grundprofil (20) am freien Rand mindestens des einen Schenkels (22 und/oder 23) einen Seitenflansch (12) aufweist, welcher eine Auflagefläche für den Rand einer von innen montierten Wandfüllplatte (11) bietet und das zweite Profil (30) als nicht tragendes Abdeckprofil ausgebildet ist.

2. Bauprofilsatz nach Anspruch 1, dadurch gekennzeichnet, dass das Abdeckprofil (30) einen seitlichen Vorsprung (79) aufweist, welcher im montierten Zustand des Abdeckprofils (30) den Rand der Wandfüllplatte (11) gegen den Seitenflansch (12) hält.

3. Bauprofilsatz nach Anspruch 1, dadurch gekennzeichnet, dass mindestens der eine Schenkel (22 und/oder 23) des Grundprofils (20) an seiner Schmalseite eine versenkte Auflagefläche (33) für die Aufnahme des Abdeckprofils (30) aufweist.

4. Bauprofilsatz nach Anspruch 3, dadurch gekennzeichnet, dass in den Auflageflächen (33) beider Schenkel (22,23) Rillen ausgespart sind und das Abdeckprofil (30) auf seiner Rückseite Nocken (34) aufweist, die in den Rillen einklipsbar sind.

5. Bauprofilsatz nach Anspruch 1, dadurch gekennzeichnet, dass mindestens der eine Schenkel (22 und/oder 23) des Grundprofils (20) eine schräg oder parallel zum Profilboden (21) gerichtete Rinne (55) oder Rippe (65,66) aufweist und das Abdeckprofil (30) auf seiner Rückseite mindestens an seinem dem/den Schenkel/n (22 und/oder 23) entsprechenden Längsrand eine Rippe (56) bzw. Rinne (68,70) als Mittel zur Verankerung des Abdeckprofils (30) aufweist.

6. Bauprofilsatz nach Anspruch 5, dadurch gekennzeichnet, dass das Grundprofil (20) an seinem Schenkel (23) neben einer nach aussen gerichteten Rippe (66) noch einen nach aussen gerichteten Flansch (75) und das Abdeckprofil (30) an seinem die Rinne (70) bildenden Haken (69) einen nach aussen gerichteten Flansch (76) aufweist, welcher im montierten Zustand des Abdeckprofils (30) am Flansch (75) anliegt.

7. Unter Verwendung des Bauprofilsatzes nach einem der Ansprüche 1 bis 6 hergestelltes Gerippe eines Fahrzeugkastens, dadurch gekennzeichnet, dass die als Pfosten (6) eingesetzten Grundprofile (20) durch ihren Boden (21) mit anstossenden Gerippeelementen, insbesondere Quergurten (2,3) , gegebenenfalls unter Einsatz von Verbindungsstücken (25,26) und/oder von in der Grundprofilkehle (24) gelegten Verstärkungselementen (24) mittels Schraubenbolzen (27) formschlüssig verbunden sind.

8. Gerippe nach Anspruch 7, dadurch gekennzeichnet, dass die nachträglich montierten, an einem Längsrand durch parallel oder schräg zum Grundprofilboden (21) gerichteten Einrasten an dem einen Schenkel (22) des Grundprofils (20) festgehaltene Abdeckprofile (30) an ihrem anderen Längsrand am anderen, von aussen zugänglichen Schenkel (23) mittels Winkel- oder U-förmigen Stücken fixiert sind, die auch Bestandteil von Scharnierstücken (10) sein können.

**Claims**

1. Set of profiles for the body framework of a utility vehicle, in particular the rear frame thereof, consisting of two complementary profiles, namely a U-shaped basic profile (20) with an outwardly opening groove (24) and profile base (21) and a second profile (30) which can be fixed subsequently to the arms (22, 23) of the basic profile (20), characterised in that the basic profile (20) comprises at the free edge of at least one arm (22 and/or 23) a side flange (12) which offers a supporting surface for the edge of a panel (11) assembled from the inside and the second profile (30) is constructed as a nonload-bearing cover profile.

2. Set of profiles according to claim 1, characterised in that the cover profile (30) comprises a lateral projection (79) which in the assembled state of the cover profile (30) holds the edge of the panel (11) against the side flange (12).

3. Set of profiles according to claim 1, characterised in that at least one arm (22 and/or 23) of the basic profile (20) comprises at its edge a countersunk supporting surface (33) for receiving the cover profile (30).

4. Set of profiles according to claim 3, characterised in that grooves are formed in the supporting surfaces (33) of the two arms (22, 23) and the cover profile (30) comprises on its rear side projections (34) which can be snap fitted in the grooves.

5. Set of profiles according to claim 1, characterised in that at least one arm (22 and/or 23) of the basic profile (20) comprises a channel (55) or rib (65, 66) directed obliquely or parallel to the profile base (21) and the cover profile (30) comprises on its rear side at least at its longitudinal edge corresponding to the arm(s) (22 and/or 23) a rib (56) or channel (68, 70) as a means for anchoring the cover profile (30).

6. Set of profiles according to claim 5, characterised in that the basic profile (20) also comprises an outwardly directed flange (75) on its arm (23) adjacent to an outwardly directed rib (66) and the cover profile (30) comprises on its hook (69) forming the channel (70) an outwardly directed flange (76) which in the assembled state of the cover profile (30) abuts against the flange (75).

7. Vehicle body framework manufactured by using the set of profiles according to any of claims 1 to 6, characterised in that the basic profiles (20) used as posts (6) are connected by their bases (21) to abutting framework elements, in particular transverse booms (2, 3), optionally using connecting pieces (25, 26) and/or reinforcing elements (24) laid in the groove (24) of the basic profile, by means of screw bolts in form-locking relationship.

8. Framework according to claim 7, characterised in that the subsequently assembled cover profiles (30), which are retained at one longitudinal edge by latching means directed parallel or obliquely to the basic profile base (21) on one arm (22) of the basic profile (20), are fixed at their other longitudinal edge to the other arm (23), which is accessible from the outside, by means of angle pieces or U-shaped pieces which may also form part of hinge pieces (10).

**Revendications**

1. Jeu de profilés de construction pour une ossature de caisse de véhicule utilitaire, en particulier pour le cadre arrière de cette ossature, composé de deux profilés complémentaires, à savoir un profilé de base (20) en U possédant une gorge (24) qui s'ouvre vers l'extérieur et un fond de profilé (21), et un deuxième profilé (30) qui peut être fixé après coup aux branches (22, 23) du profilé de base (20), caractérisé
en ce que le profilé de base (20) présente, le long du bord libre d'au moins une branche (22 et/ou 23 ), une aile latérale (12) qui présente une surface de portée pour le bord d'un panneau de remplissage de paroi (11) monté de l'intérieur, et le deuxième profilé (30) constitue un profilé de fermeture non travaillant.

2. Jeu de profilés de construction selon la revendication 1, caractérisé en ce que le profilé de fermeture (30) présente une saillie latérale (79) qui, dans l'état monté du profilé de fermeture (30) maintient le bord du panneau de remplissage de paroi (11) contre l'aile latérale (12).

3. Jeu de profilés de construction selon la revendication 1, caractérisé en ce qu'au moins une branche (22 et/ou 23) du profilé de base (20) présente, le long de son petit côté, une surface de portée en retrait (33) destinée à recevoir le profilé de fermeture (30).

4. Jeu de profilés de construction selon la revendication 3, caractérisé en ce que des rainures sont pratiquées dans les surfaces de portée (33) des deux branches (22, 23) et le profilé de fermeture (30) présente, sur la face arrière, des saillies (34) qui peuvent s'emboîter dans les rainures.

5. Jeu de profilés de construction selon la revendication 1, caractérisé en ce qu'au moins une branche ( 22 et/ou 23) du profilé de base (20) présente une rainure (24) ou une nervure (65, 66) orientée obliquement ou parallèlement par rapport au fond (21) du profilé, et le profilé de fermeture (30) présente sur sa face arrière au moins le long de son bord longitudinal qui correspond à la branche ou aux branches (22 et/ou 23), une nervure (56) ou une rainure (68, 70) servant de moyen pour ancrer le profilé de fermeture (30).

6. Jeu de profilés de construction selon la revendication 5, caractérisé en ce que le profilé de base (20) présente sur sa branche (23) encore une aile (75) dirigée vers l'extérieur en supplément d'une nervure (66) dirigée vers l'extérieur, et le profilé de fermeture (30) présente, sur son crochet (69) qui forme la rainure (70), une aile (76) dirigée vers l'extérieur qui s'appuie contre l'aile (75) dans l'état monté du profilé de fermeture (30).

7. Ossature de caisse de véhicule réalisée à l'aide du jeu de profilés de construction selon une des revendications 1 à 6, caractérisée en ce que les profilés de base (20) utilisés comme montants (6) sont assemblés par leur fond (21), par des liaisons opérant par sûreté de forme, à l'aide de boulons (27), à des éléments de l'ossature qui butent contre eux, en particulier à des ceintures transversales (2, 3), éventuellement avec utilisation d'éléments d'assemblage (25, 26) et/ou avec utilisation d'éléments de renforcement (24) placés dans la gorge (24) du profilé de base.

8. Ossature selon la revendication 7, caractérisée en ce que les profilés de fermeture (30) montés après coup, fixés à l'une (22) des ailes du profilé de base (20), le long d'un bord longitudinal par engagement dirigé parallèlement ou obliquement par rapport au fond (21) du profilé de base, sont fixés, le long de leur autre bord longitudinal, à l'autre branche (23) accessible de l'extérieur, à l'aide d'éléments en forme de cornière ou de U, qui peuvent aussi faire partie constitutive de lames de charnières (10).

Fig. 1

Fig. 2

Fig. 3

Fig. 4

Fig. 5

Fig. 6

Fig. 7

Fig. 8

**Fig. 9**

**Fig. 10**

**Fig. 11**

14